# EUROPÄISCHE PATENTSCHRIFT

(11) **EP 0 325 556 B1**
(45) Veröffentlichungstag und Bekanntmachung des Hinweises auf die Patenterteilung: **11.08.1993**
(21) Anmeldenummer: 89730008.3
(22) Anmeldetag: 18.01.1989
(51) Int. Cl.: B26D 3/16, B26D 3/06, B23D 21/00, B26D 3/08

(54) **Vorrichtung zum Anreissen**
Marking tool
Dispositif de traçage

(30) Priorität: 18.01.1988 DE 8800643 U; 22.09.1988 DE 3832490
(43) Veröffentlichungstag der Anmeldung: 26.07.1989
(73) Patentinhaber: BERLINER WASSER-BETRIEBE EIGENBETRIEB VON BERLIN, 10631 Berlin (DE)
(72) Erfinder: Blumenscheit, Uwe, D-1000 Berlin 15 (DE); Schönewerk, Detlef, D-1000 Berlin 20 (DE); Riege, Dieter, D-1000 Berlin 45 (DE)
(74) Vertreter: Maikowski, Michael, Dipl.-Ing. Dr.

(56) Entgegenhaltungen:
- EP-A- 0 206 376
- EP-A- 0 213 061
- BE-A- 738 948
- DE-A- 3 529 527

## Beschreibung

Die Erfindung betrifft eine Vorrichtung zum Anreißen nach dem Oberbegriff des Patentanspruchs 1.

Zum Anschließen von jeweils mit einer metallischen Schutzfolie und einer Kunststoffschicht ummantelten Kunststoffrohren an vorhandene Leitungssysteme ist es erforderlich, am Anschlußende des Kunststoffrohres die Ummantelung zu entfernen, um eine dichte und ordnungsgemäße Klemm- oder Schweißverbindung herstellen zu können. Dieses Problem tritt insbesondere bei aus hochverdichtetem Polyäthylen (PEHD) hergestellten Wasserrohren auf, die mit einer Aluminiumfolie als Diffusionssperre und als Hilfsmittel zur Lecksuche ausgerüstet, insbesondere beklebt sind. Als Verbindungsteile werden Klemmverbinder bzw. Schweißfittinge verwendet. Im Bereich dieser Verbindungsstellen muß die Aluminiumfolie und die darüberliegende Kunststoffschutzschicht entfernt werden. Dabei muß darauf geachtet werden, daß beim Entfernen der Ummantelung das PEHD-Rohr durch Anritzen nicht beschädigt wird. Dies bedeutet, daß Kratzer und Riefen vermieden werden müssen, da sich diese nachteilig auf die Haltbarkeit des Rohres auswirken. Die Entfernung einer derartigen Ummantelung ist bisher ein zeitaufwendiger, Erfahrung und Geschick erfordernder Arbeitsvorgang.

Bei diesem Arbeitsvorgang muß die Kunststoffschicht einschließlich der metallischen Schutzfolie an der freizulegenden Stelle eingeritzt werden. Dabei muß die Ritztiefe exakt derart eingehalten werden, daß der Achsenumfang des Kunststoffrohres nicht beschädigt wird. Dieser schwierige Arbeitsvorgang wird noch dadurch erschwert, daß Kunststoffrohre ihr exakt kreisförmiges Profil nicht beibehalten und unrund werden.

Der Erfindung liegt die Aufgabe zu Grunde, für den Arbeitsvorgang des Anreißens der Beschichtung derartiger Kunststoffrohre ein Gerät zur Verfügung zu stellen, mit dem es möglich ist, die Isolierung am Ende des Kunststoffrohres zeitsparend und ohne Beschädigung des Rohrendes zu entfernen.

Erfindungsgemäß wird diese Aufgabe durch die technische Lehre des Patentanspruchs 1 gelöst.

Aus dem ermittelten Stand der Technik sind die Lösungsmerkmale gemäß Anspruch 1 weder in ihrer gesamtheit noch einzeln in Zusammenhang mit Anreißvorrichtungen bekannt.

Durch die Erfindung wird ein einfaches, als Anreißhülse ausgebildetes Arbeitsgerät geschaffen, dessen zylindrische Hülse auf das Rohrende aufgesetzt wird. Dieses Rohrende legt sich beim Aufsetzen gegen den Anschlag an. Im axialen Abstand von den Anschlagzapfen und damit im axialen Abstand vom Rohrende erstreckt sich in die Hülse eine Anreißspitze um eine Strecke hinein, die der erforderlichen Ritztiefe entspricht. Eine Verdrehung der aufgesteckten Hülse um die Rohrachse , bei der der Anschlag auf der Rohrkante gleitet, erzeugt am Außenmantel des Rohrendes einen Ritzkreis. Um an der Ritzstelle die kreisförmige Geometrie des Rohrumfanges und damit eine konstante Ritztiefe festzulegen, wird mit Vorteil am Ritzbereich durch die Anordnung von zwei radial gegen das Kunststoffrohr vorgespannten Wälzlagern eine Dreipunkt-Lagerung geschaffen, die durch die beiden Wälzlager und die Hülsenlaibungslinie, die durch die Ritzspitze hindurchgeht, gebildet wird. Dieses mechanische Dreipunkt-Zwangslager gleicht in vorteilhafter Weise Unrundungen im Rohrquerschnitt optimal aus, so daß die Ritztiefe im eingestellten Maß konstant gehalten wird. Dadurch werden nachteilige Beschädigungen an der Kunststoffrohroberfläche ausgeschaltet.

Um das Kreisrundlaufen des Rohrquerschnittes beim Ritzen optimal zu gestalten, können zu beiden Seiten des Umfangskreises der Hülse, in dem die Anreißspitze liegt, nochmals je zwei Wälzlager vorgesehen sein, wenn keine starken Krümmungen in Richtung der Rohrlängsachse auftreten.

Die Wälzlager haben vorbestimmte Winkelabstände voneinander und von der Anreißspitze.

Beim Aufsetzen und Verdrehen der Hülse auf das Kunststoffrohr erfolgt ein Anreißen der Isolation am Umfang derart, daß durch den erzeugten Anriß die Isolation leicht vom restlichen Isolationsabschnitt abgetrennt werden kann.

Mit besonderem Vorteil ist der Anschlag als eine, an der Hülse montierte, radial zur Hülsenachse sich erstreckende Anschlagfläche ausgebildet. Beim Verdrehen der Hülse gleitet diese Anschlagfläche auf der Stirnkante des Rohrendes, und dadurch wird sichergestellt, daß von der Ritzspitze ein geschlossener Kreis geritzt wird. Der Anschlag kann durch anmontierte, beispielsweise angeschweißte Winkeleisen gebildet werden. Es können aber auch sich von der Hülse aus erstreckende Streben vorgesehen sein, die eine Kreisscheibe oder einen Kreisring tragen. Eine weitere Möglichkeit besteht darin, die Anreißhülse in ein Kunststoffrohr einzubetten oder an der Anreißhülse ein Kunststoffrohr zu montieren, dessen sich von der Hülse forterstreckendes Ende innen mit einem ringförmigen Ansatz ausgestattet ist.

Bei einer weiteren vorteilhaften Ausführungsform ist der Anschlag als Anschlagschrauben ausgebildet, die auf einem Umfangskreis in gleichen Winkelabständen voneinander angeordnet sind, so daß eine symmetrisch einwandfreie Abstützung der Hülse am Rohrende bei der Verdrehung erfolgt. Dabei sind mit besonderem Vorteil drei Anschlagschrauben eingeschraubt, die einen Winkelabstand von jeweils 120° voneinander haben.

Zur Fixierung der Anschlagschrauben, d. h. zur Fixierung deren Einschraubtiefe sind jeweils zwei Kontermuttern auf diese aufgeschraubt.

Mit besonderem Vorteil ist die Anreißspitze an der Stirnfläche eines Schraubzapfens ausgebildet und erstreckt sich von diesem fort. Diese Anreißspitze ist von einer Spannut umgeben. Der Rand dieser Spannut ist als Ringfläche ausgebildet. Die Strecke, um die sich die Anreißspitze über diese Ringfläche hinauserstreckt, legt ein für alle mal die Ritztiefe fest. Beim Ritzen sich bildende Späne können in die Spannut eintreten und bilden so kein Hemmnis beim Anreißen.

Um die Ritztiefe der Anreißspitze exakt auf die jeweilige Dicke der Ummantelung des Kunststoffrohres einzustellen, ist bei einer weiteren Ausführungsform die Anreißspitze als Schraubzapfen in die Hülse einschraubbar ausgebildet.

Die Wälzlager sind mit Vorteil als federbelastete Kugellager ausgebildet. Diese Wälzlager können aber auch federbelastete Rollen- oder Nadellager sein, die in axial ausgerichtetem Linienkontakt gegen die Außenseite der Kunststoffrohre andrückbar sind.

Mit besonderem Vorteil betragen die Winkelabstände der Wälzlager voneinander und von der Anreißspitze 120° . Bei dieser Ausbildung wird eine symmetrische Dreipunkt-Lagerung geschaffen, die eine optimale mechanische Zwangsbedingung bei der Relativbewegung zwischen Hülse und Kunststoffrohr erzeugt.

Ausführungsbeispiele der Erfindung sollen in der folgenden Beschreibung unter Bezugnahme auf die Fig. der Zeichnung erläutert werden.

Es zeigen:
- Fig. 1: eine schematische Axialschnittansicht einer Anreißhülse,

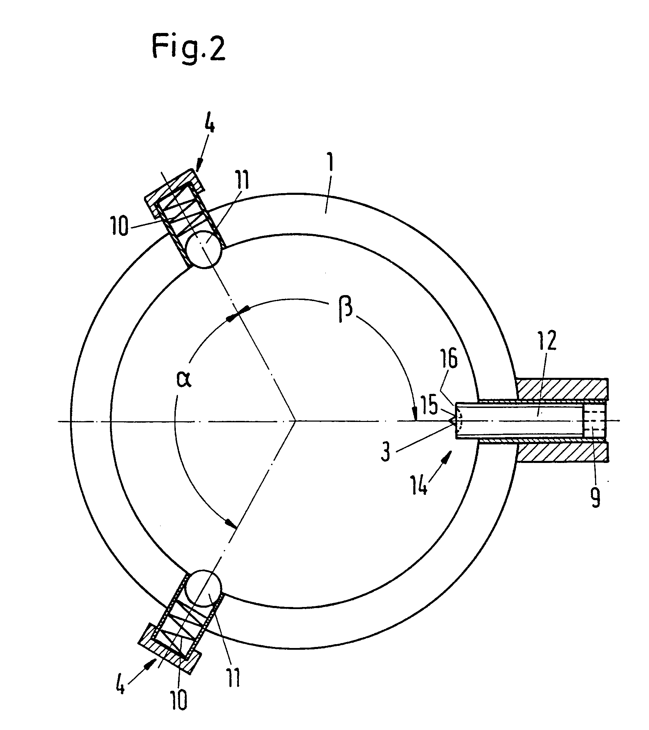

- Fig. 2: eine schematische Schnittansicht in Höhe des in Fig. 1 gezeigten Umfangkreises II-II
- Fig. 3: eine schematische Axialschnittansicht einer weiteren Ausführungsform
und
- Fig. 4: eine schematische Schnittansicht, genommen in der Höhe des in Fig. 3 gezeigten Umfangskreises II.

Bei dem in den Figuren dargestellten Ausführungsbeispielen ist eine Anreißspitze 3 in der Hülse 1 angeordnet. Diese Anreißspitze 3 bestimmt einen Umfangskreis II.

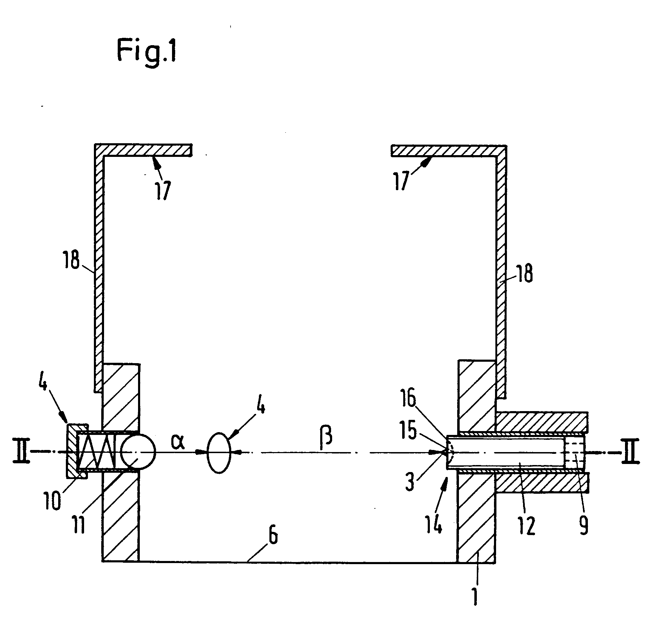

Bei dem in Fig. 1 dargestellten Ausführungsbeispiel ist die Anreißspitze 3 als spitzes Ende eines Schraubzapfens 12 ausgebildet. Dieser Schraubzapfen 12 weist einen Steckschlüssel-Senkkopf 9 auf. Der Schraubzapfen 12 ist beim dargestellten Ausführungsbeispiel senkrecht zur Hülse 1 in diese einschraubbar. Die Anreißspitze 3 erstreckt sich von der Stirnfläche 14 des Schraubzapfens 12 fort und ist von einer Spannut 15 umgeben. In diese Spannut können beim Ritzen entstehende Späne eintreten. Die Spannut 15 wird außen von einer Ringfläche 16 an der Stirnseite des Schraubzapfens 12 begrenzt. Die Strecke, um die sich die Spitze 3 über diese Ringfläche 16 hinauserstreckt, bestimmt die Ritztiefe.

Auf dem gleichen Umfangkreis II der Hülse 1, auf dem die Anreißspitze 3 liegt, sind bei den dargestellten Ausführungsbeispielen zwei durch Federn 10 nach innen vorgespannte Wälzlager 4 ausgebildet.

Wie die Figuren zeigen, haben die beiden Wälzlager 4 einen Winkelabstand α voneinander und einen Winkelabstand β von der Anreißspitze 3. Bei den dargestellten Ausführungsbeispielen sind die Winkelabschnitte α and β gleich und betragen 120° .

Den Figuren ist zu entnehmen, daß durch die beiden Wälzlager 4 und eine axialen Linie in der Laibung der Hülse 1, die in die radiale Projektion der Anreißspitze 3 in der Rohrlaibung verläuft, eine Dreipunkt-Zwangslagerung für den Rohrumfang geschaffen wird, die bei einer relativen Verdrehung der Hülse 1 gegenüber dem Rohrende an unrunden Stellen des Rohrquerschnitts die Eindringtiefe der Anreißspitze 3 in der Rohrummantelung konstant hält.

Bei den dargestellten Ausführungsbeispielen sind als Wälzlager Kugellager 11 vorgesehen, die mittels Federn 10 radial in die Hülse hinein - gegen die Oberfläche des Rohrendes vorgespannt sind.

Wie der Fig. 1 zu entnehmen ist, ist an der Hülse 1 ein Anschlag 18 für das Rohrende vorgesehen. Beim dargestellten Ausführungsbeispiel kann der Anschlag 18 aus mehreren um den Umfang der Hülse 1 herum verteilt angeschweißte Winkeleisen bestehen. Die Auschlagflächen 17 der Winkeleisen verlaufen dabei radial zur Achse der Hülse 1. Gegen diese Flächen 17 kann sich beim Aufsetzen der Hülse 1 das Rohrende anlegen. Der Anschlag kann aber auch derart ausgebildet sein, daß er aus einer Strebenkonstruktion besteht, und die Anschlagfläche als ein Ring ausgebildet ist. Anstatt eines Ringes kann auch eine Kreisscheibenfläche vorgesehen sein. Der Anschlag kann aber auch so gestaltet sein, daß er als Kunststoffrohr ausgebildet ist, dessen Endabschnitt einen Ringansatz mit der Anschlagfläche trägt.

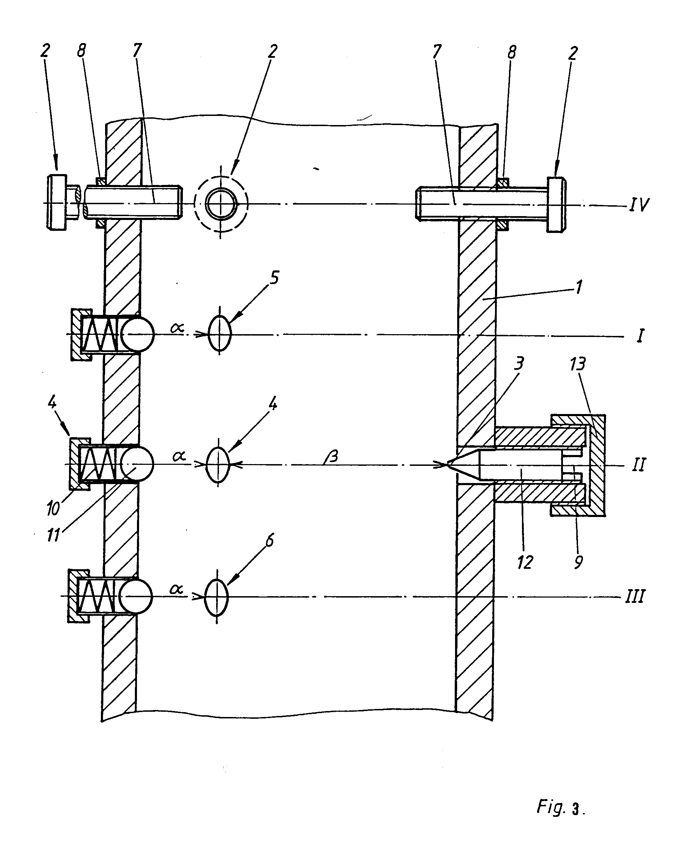

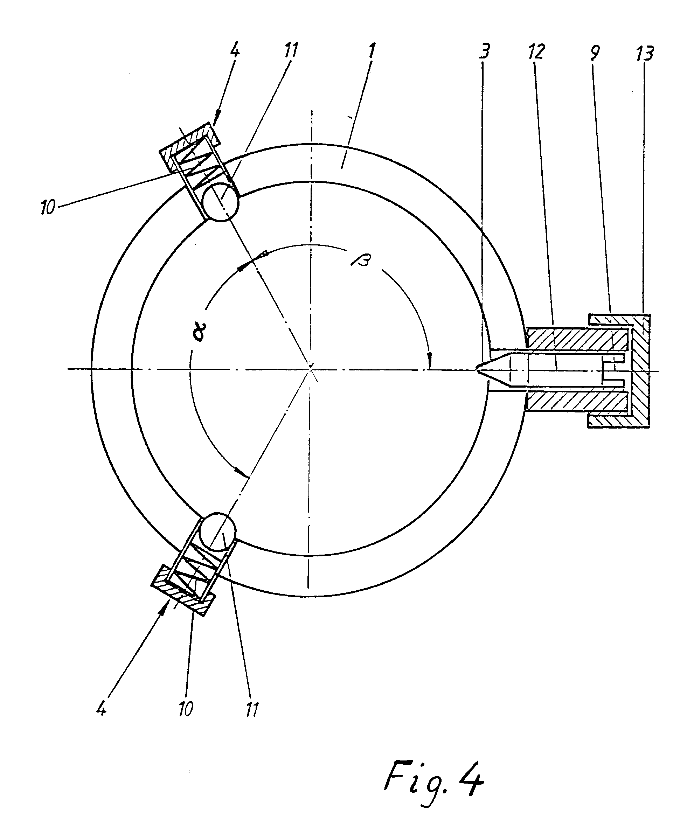

Bei dem in den Fig. 3 und 4 dargestellten Ausführungsbeispiel sind auf einem Umfangskreis IV drei sich radial erstreckende Anschlagschrauben 7 in die Hülse 1 eingeschraubt. Diese Anschlagschrauben 7 haben einen Umfangswinkelabstand von 120° voneinander. Die Anschlagschrauben 7 legen sich beim Aufsetzen der Hülse 1 auf ein Rohrende gegen dessen Stirnseite derart an, daß die Hülse 1 um dieses Rohrende leicht verdreht werden kann.

Im axialen Abstand von den Anschlagschrauben 7 und damit vom Umfangskreis IV ist beim dargestellten Ausführungsbeispiel in der Hülse 1 eine Anreißspitze 3 angeordnet.

Zur Sicherung der Einschraubtiefe sind Kappen 13 vorgesehen.

Um die Konstanthaltung der Eindringtiefe der Anreißspitze 3 zu optimieren, sind, wie Fig. 3 zeigt, zwei weitere Wälzlagergruppen 5, 6 auf Umfangskreisen I und III vorgesehen, die zu beiden Seiten des Umfangskreises II im axialen Abstand von diesem liegen. Die Anordnung der Wälzlager 5, 6 ist geometrisch kongruent zu der Anordnung der Wälzlager 4, so daß die Wälzlagergruppen 4, 5 und 6 axial fluchtend liegen. Diese Wälzlager 4, 5 und 6 können auch als vorgespannte Nadel- oder Rollenlager ausgebildet sein, wobei sich die Achsen der Nadeln oder Rollen koaxial zur Achse der Hülse 1 erstrecken. Bei dieser Ausbildung erhält man zwischen den Wälzlagern und der Rohraußenseite einen Linienkontakt.

## Patentansprüche

1. Vorrichtung zum Anreißen für mit einer metallischen Schutzfolie und einer Kunststoffschicht ummantelte Kunststoffrohre (PEHD),
gekennzeichnet durch
eine zylindrische Hülse (1) mit einem, gegen das Rohrende anlegbaren Anschlag (2, 18),
eine im axialen Abstand vom Anschlag (2, 18) radial in die Hülse (1) hineinragende Anreißspitze (3), und
zwei auf dem gleichen Umfangskreis (II) wie die Anreißspitze (3), im Winkelabstand β von dieser und voneinander α in der Laibung der Hülse (1) angeordnete, radial gegen das Kunststoffrohr vorspannbare Wälzlager (4).

2. Vorrichtung nach Anspruch 1,
gekennzeichnet, durch
jeweils zwei auf im axialen Abstand zu beiden Seiten der Anreißspitze (3) liegenden Umfangskreisen (I, III), im Winkelabstand (β) von dieser und voneinander (α) angeordnete Wälzlager (5, 6).

3. Vorrichtung nach Anspruch 1 oder 2,
dadurch gekennzeichnet, daß
der Anschlag als eine an der Hülse (1) montierte, radial zur Hülsenachse sich erstreckende Anschlagfläche (17) ausgebildet ist.

4. Vorrichtung nach Anspruch 1 oder 2,
dadurch gekennzeichnet, daß
der Anschlag Anschlagschrauben (7) aufweist, die auf einem Umfangkreis (IV) in gleichen Winkelabständen voneinander an der Hülse (1) angeordnet sind.

5. Vorrichtung nach mindestens einem der Ansprüche 1 - 4,
dadurch gekennzeichnet, daß
die Anreißspitze (3) sich von der Stirnfläche (14) eines Schraubzapfens (12) erstreckt und
von einer Spannut (15) umgeben ist,
deren Umfangsrand als Ringfläche (16) ausgebildet ist.

6. Vorrichtung nach mindestens einem der Ansprüche 1 bis 4,
dadurch gekennzeichnet, daß
die Anreißspitze (3) als Schraubzapfen (12) in die Hülse (1) auf eine vorbestimmte Ritztiefe einschraubbar ist.

7. Vorrichtung nach mindestens einem der Ansprüche 1 bis 6,
dadurch gekennzeichnet, daß
die Wälzlager (4, 5, 6) federbelastete (10) Kugellager (11) sind.

8. Vorrichtung nach mindestens einem der Ansprüche 1 bis 7,
dadurch gekennzeichnet, daß
die Winkelabstände α, β 120° betragen.

## Claims

1. Rippng open device for plastics pipes (HDPE) encased in a protective metal foil and a plastics layer,
characterised by
a cylindrical sleeve (1) with a stop (2,18) which can be placed against the pipe end,
a ripping point (3) projecting radially into the sleeve (1) axially spaced from the stop (2,18), and
two rolling bearings (4) which are mounted on the same circumferential circle (II) as the ripping point (3) at an angular distance from the latter and from each other in the surface of the sleeve (1) and which can be radially pretensioned against the plastics pipe.

2. Device according to claim 1,
characterised by
two rolling bearings (5,6) mounted on circumferential circles (I, III) lying axially spaced on both sides of the ripping point (3) at an angular distance ( β) from this and from each other (α).

3. Device according to claim 1 or 2,
characterised in that
the stop is designed as a stop face (17) mounted on the sleeve (1) and extending radially towards the sleeve axis.

4. Device according to claim 1 or 2
characterised in that
the stop has stop screws (7) which are mounted on the sleeve (1) on a circumferential circle (IV) at even angular distances from each other.

5. Device according to at least one of claims 1 to 4
characterised in that
the ripping point (3) extends from the end face (14) of a screw pin (12) and
is enclosed by a bored groove (15)
whose circumferential edge is designed as a ring face (16).

6. Device according to at least one of claims 1 to 4
characterised in that
the ripping point (3) can be screwed as a screw pin into the sleeve (1) to a predetermined notch depth.

7. Device according to at least one of claims 1 to 6
characterised in that
the rolling bearings (4, 5, 6) are spring-loaded ball bearings (11).

8. Device according to at least one of claims 1 to 7
characterised in that
the angular distances α, β amount to 120°.

## Revendications

1. Dispositif destiné au traçage de tubes en matière synthétique enrobés d'une feuille de protection métallique et d'une couche de matière synthétique,
caractérisé en ce que
une gaine cylindrique (1) munie d'une butée (12, 18) pouvant être appliquée contre l'extrémité du tube,
une pointe de traçage (3) à une distance axiale de la butée (2, 18) faisant saillie radialement dans la gaine (1), et
deux paliers à rouleaux (4) disposés sur le même cercle périphérique (II) que la pointe de traçage (3), à une certaine distance angulaire de celle-ci et entre eux (α) à l'intérieur de la gaine (1), pouvant être précontraints radialement contre le tube en matière synthétique.

2. Dispositif selon la revendication 1,
caractérisé
par respectivement deux paliers à rouleaux (5, 6) agencés sur les cercles périphériques (I, III) situés selon un espacement axial par rapport aux deux côtés de la pointe de traçage (3), à une distance angulaire (β) par rapport à celle-ci et entre eux (α).

3. Dispositif selon la revendication 1 ou 2,
caractérisé en ce que
la butée est conçue sous forme de surface de butée (17) montée sur la douille (1), et s'étendant radialement à l'axe de la douille.

4. Dispositif selon la revendication 1 ou 2,
caractérisé en ce que
la butée comporte des vis de butée (7) qui sont agencées sur un cercle périphérique (IV) selon les mêmes espacements angulaires entre eux sur la douille (1).

5. Dispositif selon au moins l'une des revendications 1-4,
caractérisé en ce que
la pointe de traçage (3) s'étend à partir de la surface frontale (14) d'une cheville filetée (12) et
entourée d'une gorge de serrage (15)
dont le bord périphérique est conçu sous forme de surface annulaire (16).

6. Dispositif selon au moins l'une des revendications 1 à 4,
caractérisé en ce que
la pointe de traçage (3) sous forme de cheville filetée (12) peut être vissée dans la douille (1) selon une profondeur d'entaille prédéterminée.

7. Dispositif selon au moins l'une des revendications 1 à 6,
caractérisé en ce que
les paliers à rouleaux (4, 5, 6) sont des paliers à billes (11) montés sur ressorts (10).

8. Dispositif selon au moins l'une des revendications 1 à 7, caractérisé en ce que les espacements angulaires (α, β) sont de 120°.
